# FASCICULE DE BREVET EUROPEEN

(11) **EP 3 820 748 B1**
(45) Date de publication et mention de la délivrance du brevet: **04.05.2022**
(21) Numéro de dépôt: 19749396.8
(22) Date de dépôt: 05.07.2019
(51) Int. Cl.: B60T 7/04, B60T 8/17, B60T 13/66

(54) **PROCEDE ET CIRCUIT DE FREINAGE HYDRAULIQUE D'URGENCE AMELIORES POUR ATTELAGE**
VERBESSERTES HYDRAULISCHES NOTBREMSVERFAHREN UND SCHALTUNG FÜR KUPPLUNG
IMPROVED EMERGENCY HYDRAULIC BRAKING METHOD AND CIRCUIT FOR COUPLING

(30) Priorité: 10.07.2018 FR 1856343
(43) Date de publication de la demande: 19.05.2021
(73) Titulaire: Poclain Hydraulics Industrie, 60410 Verberie (FR)
(72) Inventeur: PRIGENT, André, 60410 Verberie (FR)
(74) Mandataire: Cabinet Beau de Loménie
(86) Numéro de dépôt international: PCT/FR2019/051678
(87) Numéro de publication internationale: WO 2020/012096

(56) Documents cités:
- WO-A1-2017/050632
- WO-A1-2018/100489
- GB-A- 2 196 074
- GB-A- 2 540 346
- US-A1- 2013 124 058

## Description

### DOMAINE DE L'INVENTION

La présente invention concerne le domaine des véhicules munis d'un circuit hydraulique et adaptés pour recevoir un attelage tel qu'une remorque.

### ETAT DE LA TECHNIQUE ANTERIEURE

Les systèmes de freinage hydrauliques pour véhicules pouvant être munis d'un attelage, par exemple des tracteurs, comprennent une ligne de commande et une ligne supplémentaire reliant le véhicule à son attelage.

La ligne de commande est pilotée par l'utilisateur, en fonction d'une consigne de freinage qu'il applique, par exemple en appuyant sur une pédale de frein de service du véhicule.

La ligne supplémentaire est quant à elle typiquement alimentée en pression par une pompe délivrant une pression fixe et relativement faible.

Les véhicules pouvant être munis d'un attelage comprennent également un frein de secours, pouvant réaliser une action de freinage sur le véhicule et sur son attelage notamment en cas de défaillance d'un frein de service du véhicule. Un exemple est le document GB 2 196 074 A.

La règlementation UE 2015/68 impose une double contrainte par rapport au frein à main (ou frein de parking) du véhicule et par rapport au frein de secours :
- Lors d'un actionnement du frein de parking, la pression dans la ligne supplémentaire doit être nulle lorsque le frein de parking est actionné à son maximum, et
- Lors d'un actionnement du frein de secours, ce dernier doit générer un freinage modulable sur la remorque lorsque la vitesse du véhicule est supérieure à 40 km/h.

Cette réglementation pose donc de nouvelles problématiques pour la réalisation du frein de parking et du frein de secours, notamment dans le cas où la fonction de frein de secours est réalisée par le frein de parking du véhicule.

### PRESENTATION DE L'INVENTION

Le présent exposé vise ainsi à proposer une réponse à cette problématique.

A cet effet, le présent exposé propose un procédé de pilotage d'un frein de parking de véhicule comprenant une ligne de commande et une ligne supplémentaire adaptées pour être reliées à un système de freinage hydraulique d'un attelage, dans lequel on pilote la pression au sein de la ligne de commande et de la ligne supplémentaire en fonction d'une consigne appliquée au frein de parking comprise entre 0 et Cmax, ledit procédé de pilotage étant tel que :
- pour une consigne comprise entre 0 et C1, la pression au sein de la ligne de commande est nulle, et la pression au sein de la ligne supplémentaire est maintenue à une valeur constante Psupp non nulle ;
- pour une consigne comprise entre C1 et C3, une pression de freinage proportionnelle à la consigne est appliquée via la ligne de commande ;
- pour une consigne comprise entre C2 et Cmax, la pression au sein de la ligne supplémentaire est nulle ;

lesdites valeurs étant telles que
0 ≤ C1 < C2 ≤ Cmax, et
0 ≤ C1 < C3 ≤ Cmax.

Selon un exemple, pour une consigne comprise entre C1 et C2, la pression au sein de la ligne supplémentaire est maintenue à la valeur constante Psupp.

Selon un exemple, pour une consigne comprise entre C3 et Cmax, la pression au sein de la ligne de commande est nulle.

Selon un exemple, la pression de freinage proportionnelle à la consigne appliquée via la ligne de commande est linéaire et continue pour une consigne comprise entre C1 et C3.

Selon un exemple, valeurs de C1, C2 et C3 sont modifiées en fonction de l'usure du système de freinage hydraulique de l'attelage.

Selon un exemple, les valeurs C1, C2 et C3 sont telles que 0,05 Cmax < C1 < 0,15 Cmax,
0,7 Cmax < C2 < 0,8 Cmax,
0,75 Cmax < C3 < 0,9 Cmax.

Selon un exemple, les valeurs C1, C2 et C3 sont telles que 0 ≤ C1 < C2 < C3 ≤ Cmax.

Le présent exposé concerne également un système hydraulique de freinage d'un véhicule comprenant une ligne de commande et une ligne supplémentaire adaptées pour être reliées à un système de freinage hydraulique d'un attelage, un frein de parking et un calculateur configuré de manière à piloter la pression au sein de la ligne de commande via une valve de commande et de la ligne supplémentaire via une valve supplémentaire en fonction d'une consigne appliquée au frein de parking comprise entre 0 et Cmax,
ledit calculateur étant configuré de manière à
- pour une consigne comprise entre 0 et C1, piloter la valve de commande de sorte que la pression au sein de la ligne de commande soit nulle, et piloter la valve supplémentaire de sorte que la pression au sein de la ligne supplémentaire soit maintenue à une valeur constante Psupp non nulle ;
- pour une consigne comprise entre C1 et C3, piloter la valve de commande de sorte que la pression au sein de la ligne de commande soit proportionnelle à ladite consigne ;
- pour une consigne comprise entre C2 et Cmax, piloter la valve supplémentaire de sorte que la pression au sein de la ligne supplémentaire soit nulle ;

lesdites valeurs étant telles que
0 ≤ C1 < C2 ≤ Cmax, et
0 ≤ C1 < C3 ≤ Cmax.

Selon un exemple, le calculateur est configuré de manière à, pour une consigne comprise entre C1 et C2, piloter la valve supplémentaire de sorte que la pression au sein de la ligne supplémentaire soit maintenue à la valeur constante Psupp.

Selon un exemple, le calculateur est configuré de manière à, pour une consigne comprise entre C3 et Cmax, piloter la valve de commande de sorte que la pression au sein de la ligne de commande soit nulle.

Selon un exemple, la pression de freinage proportionnelle à la consigne appliquée via la ligne de commande est continue pour une consigne comprise entre C1 et C3, typiquement linéaire et continue pour une consigne comprise entre C1 et C3.

Selon un exemple, le calculateur est configuré de manière à modifier les valeurs de C1, C2 et C3 en fonction de l'usure du système de freinage hydraulique de l'attelage.

Selon un exemple, les valeurs C1, C2 et C3 sont telles que
0,05 Cmax < C1 < 0,15 Cmax,
0,7 Cmax < C2 < 0,8 Cmax,
0,75 Cmax < C3 < 0,9 Cmax.

Selon un exemple, les valeurs C1, C2 et C3 sont telles que 0 ≤ C1 < C2 < C3 ≤ Cmax.

Le présent exposé concerne en outre un véhicule muni d'un tel système.

### BREVE DESCRIPTION DES DESSINS

L'invention et ses avantages seront mieux compris à la lecture de la description détaillée faite ci-après de différents modes de réalisation de l'invention donnés à titre d'exemples non limitatifs. Cette description fait référence aux pages de figures annexées, sur lesquelles :
- la figure 1 représente schématiquement un système selon un aspect de l'invention,
- la figure 2 illustre schématiquement un procédé selon un aspect de l'invention,
- les figures 3 et 4 représentent deux variantes du système représenté sur la figure 1.

Sur l'ensemble des figures, les éléments en commun sont repérés par des références numériques identiques.

### DESCRIPTION DETAILLEE D'EXEMPLES DE REALISATION

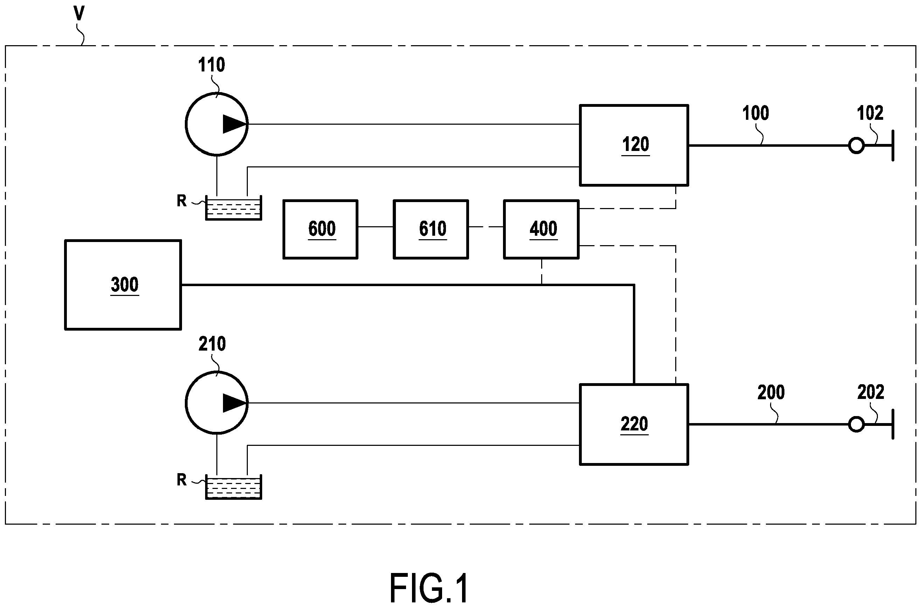

La figure 1 présente un exemple de circuit hydraulique de véhicule selon un aspect de l'invention.

On représente schématiquement sur cette figure un véhicule V muni d'un système hydraulique comprenant une ligne supplémentaire 100 et une ligne de commande 200.

La ligne supplémentaire 100 est reliée à un connecteur supplémentaire 102, et la ligne de commande est reliée à un connecteur de commande 202, lesdits connecteurs 102 et 202 étant adaptée pour être reliés à un circuit hydraulique d'attelage comme défini dans la norme UE 2015/68, et comme par exemple présenté dans la demande de brevet FR3037023.

La ligne supplémentaire 100 est alimentée par une source de pression supplémentaire 110, associée à une valve supplémentaire 120 permettant de piloter la pression au sein de la ligne supplémentaire 100 et délivrée au connecteur supplémentaire 102. La ligne supplémentaire 100 est typiquement reliée à un frein à action négative d'un attelage, c'est-à-dire un frein qui est engagé par défaut, et qui est désengagé lorsqu'une pression suffisante est appliquée. Typiquement une pression faible ou inférieure à une valeur seuil dans la ligne supplémentaire 100 entraine un l'engagement d'un frein de parking du véhicule V soit par l'utilisation d'un frein dit négatif, qui vient appliquer l'effort de freinage par défaut (c'est-à-dire en l'absence de pression) soit par vidange d'une réserve de fluide, typiquement un accumulateur de pression, dans un frein positif (qui applique un effort de freinage lorsqu'une pression de freinage est appliquée), cette vidange étant actionné ou piloté par la détection d'une pression inférieure à une valeur seuil de pression dans la ligne supplémentaire 100, par exemple à l'aide d'un manocontact.

La ligne de commande 200 est alimentée par une source de pression de commande 210, associée à une valve de commande 220 permettant de piloter la pression au sein de la ligne de commande 200 et délivrée au connecteur de commande 202. La ligne de commande 200 est typiquement reliée à un frein à action positive d'un attelage, c'est-à-dire un frein qui est désengagé par défaut, et qui exerce une action de freinage proportionnelle à la pression qui lui est appliquée. Dans l'exemple représenté sur la figure 1, la source de pression supplémentaire 110 et la source de pression de commande 210 sont distinctes. En variante, il peut s'agir d'une même source de pression, le fonctionnement étant alors inchangé.

Le véhicule V comprend un calculateur 400, que l'on désigne de manière commune par l'acronyme en langue anglaise ECU (Electronic Control Unit) ou unité de contrôle électronique.

Le véhicule V comprend également une commande de freinage 300, typiquement un actionneur tel qu'une pédale de frein pilotée directement par l'utilisateur, de manière à appliquer une pression de freinage Pf. La valve de commande 220 est pilotée par le calculateur 400 et par la pression de freinage Pf, de sorte qu'une pression de commande Pc délivrée par la valve de commande 220 à la ligne de commande 200 soit fonction de la pression de freinage Pf.

Le véhicule V comprend un frein de parking 600 muni d'un actionneur 610 pouvant être actionné par l'utilisateur, typiquement un levier de frein à main, une commande de frein à main ou une pédale pouvant réaliser un pilotage mécanique du frein de parking 600 par exemple au moyen d'un câble, ou un actionneur électronique pilotant ainsi le frein de parking 600 via le calculateur 400. La figure 1 illustre le mode de réalisation dans lequel l'actionneur 610 réalise un pilotage mécanique du frein de parking 600. L'actionneur 610 peut ainsi appliquer une consigne C comprise entre 0 et Cmax, une valeur de consigne égale à 0 correspondant à un état dans lequel le frein de parking 600 est totalement désengagé. Par frein de parking, on entend un frein de véhicule distinct d'un frein de service, le frein de service étant le frein utilisé pour moduler la vitesse du véhicule lorsque celui-ci est en déplacement, tandis que le frein de parking sert à immobiliser le véhicule lorsque le moteur est à l'arrêt.

La consigne C ou course appliquée à l'actionneur 610 du frein de parking 600 est relevée par exemple au moyen d'un potentiomètre, et est transmise au calculateur 400, qui pilote la valve supplémentaire 120 et la valve de commande 220 afin de moduler la pression délivrée à la ligne supplémentaire 100 et à la ligne de commande 200 en fonction de cette consigne.

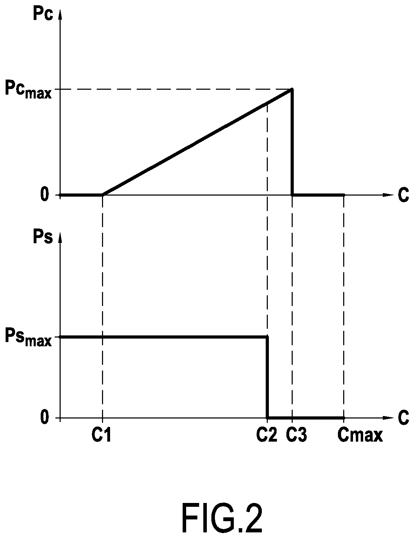

La figure 2 illustre schématiquement le procédé de commande de la valve supplémentaire 120 et de la valve de commande 220 par le calculateur 400 en fonction de la consigne appliquée à l'actionneur 610 du frein de parking 600.

On représente sur cette figure deux graphes, illustrant la pression Pc au sein de la ligne de commande 200 et d'une pression Ps au sein de la ligne supplémentaire 100 en fonction de la consigne C appliquée à l'actionneur 610 du frein de parking 600.

On distingue sur les graphes plusieurs valeurs de consigne, C1, C2 et C3, comprises entre 0 et Cmax, et telles que 0 ≤ C1 < C2 ≤ Cmax et 0 ≤ C1 < C3 ≤ Cmax, ou typiquement telles que 0 ≤ C1 < C2 ≤ C3 ≤ Cmax, ou encore typiquement telles que 0 < C1 < C2 < C3 < Cmax.

Pour une consigne comprise entre 0 et C1, le calculateur 400 pilote la valve supplémentaire 120 et la valve de commande 220 de sorte qu'aucun effort de freinage ne soit appliqué via la ligne de commande 200 ou via la ligne supplémentaire 100.

La pression appliquée via la ligne supplémentaire 100 est ainsi constante et égale à une valeur Psmax, correspondant à la pression nécessaire pour désengager un frein d'attelage relié à la ligne supplémentaire 100. La pression au sein de la ligne de commande 200 est nulle.

Ce premier intervalle compris entre 0 et C1 définit ainsi une marge de sécurité permettant de s'assurer que l'attelage du véhicule V n'est pas freiné lorsque le frein de parking 600 est désengagé et également de s'assurer de la volonté de freinage du conducteur en ne freinant pas si le frein de parking 600 n'est pas bien ramené à sa position désengagée par l'utilisateur, typiquement si l'utilisateur ne ramène pas bien l'actionneur 610 du frein de parking 600 dans une position correspondant à une consigne C égale à 0.

Pour une consigne comprise entre C1 et C2, le calculateur 400 maintient une pression constante Psmax dans la ligne supplémentaire 100, et pilote la valve de commande 220 de sorte qu'une pression de freinage proportionnelle à la consigne est appliquée via la ligne de commande 200. La pression de freinage appliquée via la ligne de commande 200 est typiquement linéaire, sous forme d'une rampe.

Cet intervalle compris entre C1 et C2 définit ainsi une plage de valeurs dans laquelle un freinage progressif peut être piloté au moyen du frein de parking 600 via son actionneur 610, qui remplit donc ici une fonction de frein de secours.

Pour une consigne comprise entre C2 et C3, le calculateur 400 continue de piloter la valve de commande 220 de sorte qu'une pression de freinage proportionnelle à la consigne est appliquée via la ligne de commande 200. La pression Pc appliquée via la ligne de commande 200 est ici également typiquement linéaire, sous forme d'une rampe, dans le prolongement de la rampe pour la consigne comprise entre C1 et C2, jusqu'à atteindre une pression Pcmax lorsque la consigne C est égale à C3. La pression Ps appliquée via la ligne supplémentaire 100 est quant à elle ramenée à 0.

Cet intervalle compris entre C2 et C3 définit ainsi une plage de valeurs dans laquelle l'attelage est freiné du fait de la chute de pression dans la ligne supplémentaire 100. Cette chute de pression va en effet entrainer un effort de freinage sur l'attelage par exemple au moyen d'un frein dit négatif, qui vient appliquer l'effort de freinage par défaut (c'est-à-dire en l'absence de pression), ou par vidange d'une réserve de fluide, typiquement un accumulateur de pression, dans un frein positif (qui applique un effort de freinage lorsqu'une pression de freinage est appliquée), cette vidange étant actionné ou piloté par la détection d'une pression inférieure à une valeur seuil de pression dans la ligne supplémentaire 100, par exemple à l'aide d'un manocontact. Le frein alimenté par la ligne de commande 200 continue à exercer un effort de freinage croissant.

Cet intervalle compris entre C2 et C3 est typiquement assez réduit, et définit une plage de recouvrement permettant de s'assurer qu'il y a une continuité entre le freinage exercé par la ligne de commande 600 et le freinage réalisé par le frein à effet négatif relié à la ligne supplémentaire 100. On s'assure ainsi qu'il n'y ait pas de position de l'actionneur 610 du frein de parking 600 qui ne produit aucun effort de freinage sur l'attelage A.

En variante, les valeurs C2 et C3 sont égales. L'intervalle compris entre C2 et C3 est donc nul ; il n'y a pas de plage de recouvrement. Le système passe alors directement du freinage réalisé par la ligne de commande 600 au freinage réalisé par le frein à effet négatif.

Selon une autre variante, les valeurs de C2 et de C3 sont telles que C3 < C2. Dans cette variante, il n'y a alors pas de continuité entre le freinage exercé par la ligne de commande 600 et le freinage réalisé par le frein à effet négatif relié à la ligne supplémentaire 100. Toutefois, dans la mesure où un freinage maximum est atteint pour une valeur de consigne égale à C3, le passage de C3 à C2 est alors réalisé alors que le véhicule V est à l'arrêt ou a suffisamment ralenti, ce qui peut ainsi se traduire par un à-coup négligeable voire inexistant en fonction de la vitesse d'application de la consigne C.

Pour une consigne comprise entre C3 et Cmax, la pression Ps au sein de la ligne supplémentaire 100 est maintenue à 0, et la pression Pc au sein de la ligne de commande 200 est ramenée à 0.

Dans cet intervalle, l'attelage et le véhicule V sont à l'arrêt. La pression nulle au sein de la ligne supplémentaire 100 et de la ligne de commande 200 autorise la connexion ou déconnexion des conduits hydrauliques de l'attelage aux connecteurs 102 et 202 du véhicule V.

Ce procédé de commande définit ainsi plusieurs états en fonction de la consigne C appliquée à l'actionneur 610 du frein de parking 600, et de cumuler les fonctions de frein de secours et de frein de parking sur un unique frein de parking.

Les valeurs de C1 ; C2 et C3 peuvent être déterminées de manière à modifier l'amplitude des différents intervalles en fonction du comportement souhaité pour le frein de parking 600.

La valeur C1 est typiquement comprise entre 5% Cmax et 15% Cmax, typiquement égale à 10% Cmax.

La valeur C2 est typiquement comprise entre 70% Cmax et 80% Cmax, typiquement égale à 75% Cmax.

La valeur C3 est typiquement comprise entre 75% Cmax et 90% Cmax , typiquement égale à 80% Cmax.

Pour des questions d'ergonomie, par exemple, il peut être envisagé que les valeurs C1, C2, et C3 soient chacune inférieure à une valeur prédéterminée, par exemple 50 % Cmax. A titre d'exemple, les valeurs C1, C2 et C3 peuvent alors être telles que 0,05 Cmax < C1 < 0,015 Cmax, 0,3 Cmax < C2 < 0,45 Cmax, et 0,4 Cmax < C3 < 0,5 Cmax.

Le système et le procédé proposés permettent ainsi de réguler le pilotage d'un frein d'un attelage afin de remplir des fonctions de frein de secours et de frein de parking au moyen d'une seule commande (ici l'actionneur 610). La fonction de freinage de secours de l'attelage est réalisée de manière progressive en fonction de la commande appliquée par l'utilisateur, comme cela est déjà le cas pour le freinage de secours d'un véhicule, ce qui permet d'éviter les risques de mise en portefeuille ou de détérioration des freins du véhicule et de son attelage associé.

Par ailleurs, le système et le procédé proposés sont aisément paramétrables notamment en modifiant les valeurs de C1, C2 et C3, ce qui peut ainsi permettre de moduler les différents intervalles par exemple en fonction de l'usure du frein, cette usure pouvant par exemple être estimé automatiquement notamment en programmant une usure prévisionnelle dans le calculateur 400.

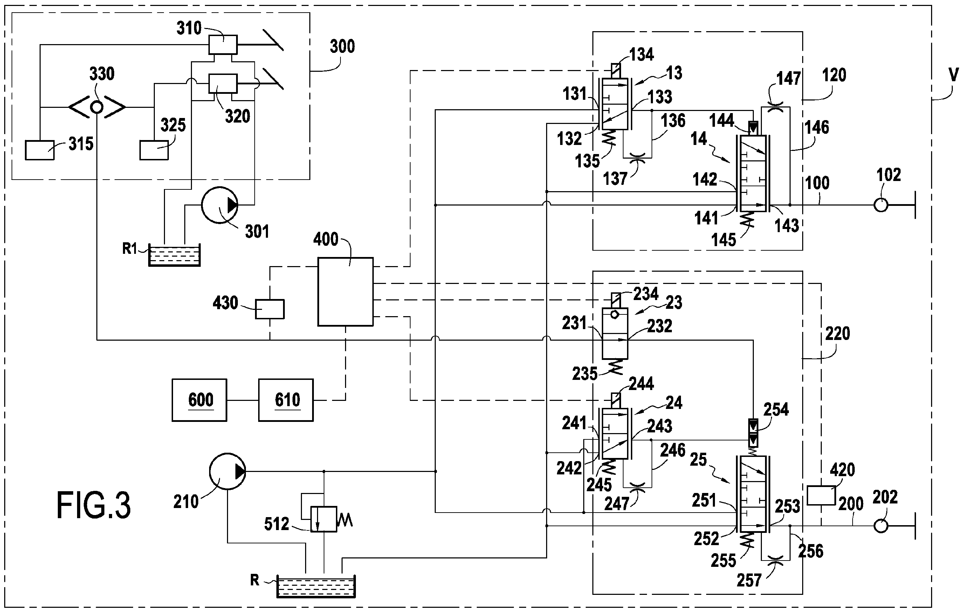

La figure 3 illustre une variante du système présenté précédemment en référence à la figure 1.

Le véhicule V comprend une commande de freinage 300, typiquement un actionneur tel qu'une pédale de frein pilotée directement par l'utilisateur, de manière à appliquer une pression de freinage Pf. La valve de commande 220 est pilotée par la pression de freinage Pf, de sorte qu'une pression de commande Pc délivrée par la valve de commande 220 à la ligne de commande 200 soit fonction de la pression de freinage Pf. La commande de freinage 300 telle que représentée comprend deux actionneurs de freinage 310 et 320, pilotant chacun un frein, respectivement 315 et 325, pour un côté (droite ou gauche) du véhicule V. Une telle structure de commande de freinage est notamment employée pour les véhicules agricoles, et permet de faciliter les virages. On comprend que l'invention s'applique également pour une commande de freinage 300 ayant un actionneur de freinage unique pour les deux côtés d'un véhicule, l'exemple de commande de freinage 300 illustré étant purement illustratif et non limitatif.

Les actionneurs de freinage 310 et 320 sont chacun reliés à une source de pression de freinage 301 et à un premier réservoir R1 dans lequel la source de pression de freinage 301 prélève un premier fluide.

La commande de freinage 300 comprend un sélecteur de haute pression 330, de sorte que la pression en sortie de la commande de freinage 300, c'est-à-dire la pression de freinage Pf, correspond à la pression la plus élevée parmi celle délivrée par les actionneurs de freinage 310 et 320. Le calculateur 400 est associé à un capteur de pression de freinage 430 qui mesure ainsi la pression de freinage Pf en sortie du sélecteur de haute pression 330.

Dans le mode de réalisation représenté, la source de pression supplémentaire 110 et la source de pression de commande 210 sont une seule et même source de pression, ici une pompe hydraulique désignée par la référence 510.

La source de pression 510 est associée à un limiteur de pression 512 adapté pour décharger un excédent de pression au-delà d'une valeur seuil de pression dans un second réservoir R2 dans lequel la source de pression 510 prélève un second fluide.

La valve supplémentaire 120 telle que représentée comprend deux valves ; une valve supplémentaire de pilotage 13 et une valve supplémentaire de sortie 14.

La valve supplémentaire de pilotage 13 comprend un premier orifice 131 relié à la source de pression supplémentaire 110, un second orifice 132 relié à un réservoir R2, et un troisième orifice 133. On comprend que le circuit proposé sur la figure 3 permet d'employer des fluides distincts pour la commande de freinage 300 d'une part, et pour la ligne supplémentaire 100 et la ligne de commande 200 d'autre part. Dans le cas où un même fluide est employé, les pompes hydrauliques 301 et 510 peuvent être une même et unique pompe, et les réservoirs R1 et R2 peuvent être un même réservoir.

La valve supplémentaire de pilotage 13 est pilotée par une commande électrique 134 reliée au calculateur 400, à laquelle s'opposent un moyen de rappel élastique 135 et une ligne de repiquage 136 munie d'une restriction 137 prélevant la pression au niveau du troisième orifice 133.

La valve supplémentaire de pilotage 13 alterne ainsi entre une première configuration dans laquelle le premier orifice 131 est obturé et le deuxième orifice 132 est relié au troisième orifice 133, et une seconde configuration dans laquelle le premier orifice 131 est relié au troisième orifice 133 et le deuxième orifice 132 est obturé. La valve supplémentaire de pilotage 13 est par défaut (c'est-à-dire en l'absence de commande appliquée par la commande électrique 134) dans sa première configuration. La valve supplémentaire de pilotage 13 est une valve proportionnelle, de sorte que la pression à son troisième orifice 133 soit proportionnelle à la commande appliquée via la commande électrique 134.

A titre de variante la valve supplémentaire de pilotage 13 peut être une valve à 2 positions non proportionnelle (valve que l'on qualifie de « valve ON/OFF »). Dans ce cas la ligne de repiquage 136 et sa restriction 137 ne sont pas présentes.

La valve supplémentaire de sortie 14 comprend un premier orifice 141 relié à la source de pression 510, un second orifice 142 relié au second réservoir R2, et un troisième orifice 143 relié au connecteur supplémentaire 102.

La valve supplémentaire de sortie 14 est pilotée par une commande hydraulique 144 reliée au troisième orifice 133 de la valve supplémentaire de pilotage 13 à laquelle s'oppose un moyen de rappel élastique 145. Une ligne de repiquage 146 munie d'une restriction 147 prélève la pression au niveau du troisième orifice 143 et vient l'appliquer en opposition au moyen de rappel élastique 145.

La valve supplémentaire de sortie 14 est pilotée de manière proportionnelle entre une première configuration dans laquelle le premier orifice 141 est relié au troisième orifice 143 et le deuxième orifice 142 est obturé, et une seconde configuration dans laquelle le premier orifice 141 est obturé, et le deuxième orifice est relié au troisième orifice 143.

La valve de commande 220 telle que représentée comprend trois valves ; une électrovalve tout ou rien 23, une électrovalve proportionnelle 24, et une valve proportionnelle 25.

L'électrovalve tout ou rien 23 est pilotée par une commande électrique 234 reliée au calculateur 400, à laquelle s'oppose un moyen de rappel élastique 235. Elle présente un premier orifice 231 reliée au sélecteur de haute pression 330, et un second orifice 232. L'électrovalve tout ou rien 23 est configurée pour être soit passante uniquement depuis son premier orifice vers son second orifice 232, soit passante uniquement depuis son second orifice 232 vers son premier orifice 233.

L'électrovalve proportionnelle 24 comprend un premier orifice 241 reliée à la source de pression 510, un deuxième orifice 242 relié au second réservoir R2, et un troisième orifice 243.

L'électrovalve proportionnelle 24 est pilotée par une commande électrique 244 reliée au calculateur 400, à laquelle s'opposent un moyen de rappel élastique 245 et une ligne de repiquage 246 prélevant la pression au niveau du troisième orifice 243 et munie d'une restriction 247. L'électrovanne proportionnelle 24 est pilotée de manière proportionnelle entre une première configuration dans laquelle le premier orifice 241 est obturé, et le deuxième orifice 242 est relié au troisième orifice 243, et une seconde configuration dans laquelle le premier orifice 241 est relié au troisième orifice 243, et le deuxième orifice 242 est obturé.

La valve proportionnelle 25 présente un premier orifice 251 relié à la source de pression 510, un deuxième orifice 252 relié au second réservoir R2, et un troisième orifice 253 relié au connecteur de commande 202.

La valve proportionnelle 25 est pilotée par une commande hydraulique 254, typiquement un vérin à double chambre, relié au deuxième orifice 232 de l'électrovalve tout ou rien 23 et au troisième orifice 243 de l'électrovalve proportionnelle 24, de manière à appliquer une commande correspondant à la pression la plus élevée entre la pression au niveau du deuxième orifice 232 de l'électrovalve tout ou rien 23 et du troisième orifice 243 de l'électrovalve proportionnelle 24. Un moyen de rappel élastique 255 et une ligne de repiquage 256 munie d'une restriction 257 s'opposent à la commande hydraulique 254, la ligne de repiquage prélevant la pression au niveau du troisième orifice 253.

La valve proportionnelle 25 est pilotée de manière proportionnelle entre une première configuration dans laquelle le premier orifice 251 est obturé et le deuxième orifice 252 est relié au troisième orifice 253, et une seconde configuration dans laquelle le premier orifice 251 est relié au troisième orifice 253 et le deuxième orifice 252 est obturé. La pression délivrée au troisième orifice 253 est donc proportionnelle à la pression appliquée par la commande hydraulique 254. La pression délivrée au troisième orifice est la pression de commande Pc mesurée par un capteur de pression de commande 420 et communiquée au calculateur 400.

En fonctionnement, le calculateur 400 va piloter les commandes électriques 134, 234 et 244 respectivement de la valve supplémentaire de pilotage 13, de l'électrovalve tout ou rien 23 et de l'électrovalve proportionnelle 24 afin de moduler la pression dans la ligne supplémentaire 100 et dans la ligne de commande 200, notamment en fonction de la consigne C appliquée à l'actionneur 610 du frein de parking 600 comme déjà détaillé précédemment.

Ce mode de réalisation permet d'assurer une alimentation de la ligne de commande 200 et de la ligne supplémentaire 100 même en cas de défaillance électrique du système, et permet notamment de conserver une fonction de freinage variable, bien que dégradée par rapport à un fonctionnement normal, même en cas de panne électrique.

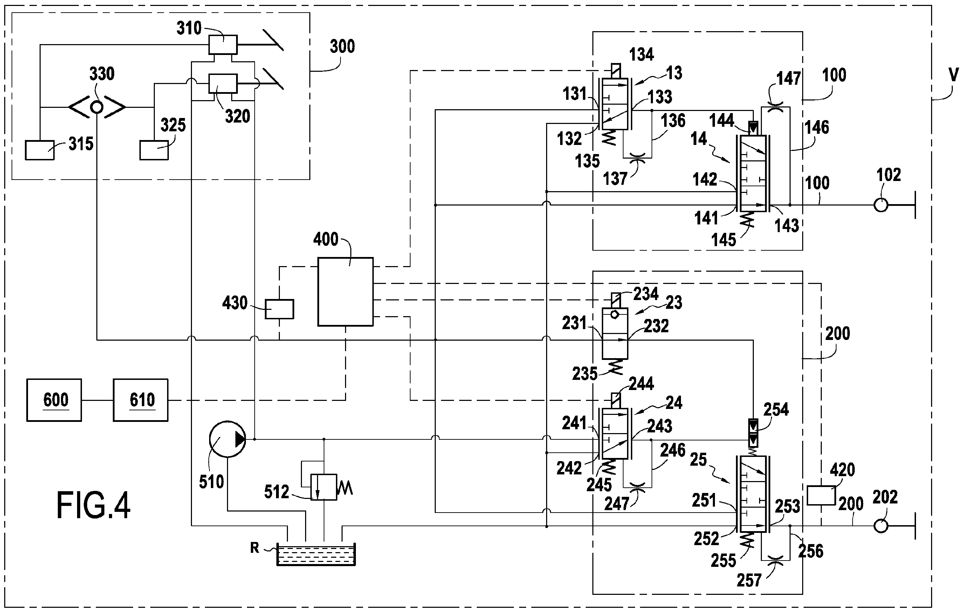

La figure 4 présente une variante du mode de réalisation. Ici également, la source de pression supplémentaire 110 et la source de pression de commande 210 présentée précédemment sur la figure 1 sont une seule et même source de pression, ici une pompe hydraulique désignée par la référence 510.

La source de pression 510 est associée à un limiteur de pression 512 adapté pour décharger un excédent de pression au-delà d'une valeur seuil de pression dans un réservoir R.

Dans ce mode de réalisation, la source de pression de freinage 301 est supprimée ; la commande de freinage 300 est ici alimentée par la source de pression 510 ; un seul fluide est ici employé, prélevé dans un unique réservoir R.

Comme pour le mode de réalisation déjà décrit en référence à la figure 3, la source de pression 510 est associée à un limiteur de pression 512 adapté pour décharger un excédent de pression au-delà d'une valeur seuil de pression dans un réservoir R.

Le fonctionnement demeure inchangé par rapport au mode de réalisation déjà décrit en référence aux figures précédentes.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

Il est également évident que toutes les caractéristiques décrites en référence à un procédé sont transposables, seules ou en combinaison, à un dispositif, et inversement, toutes les caractéristiques décrites en référence à un dispositif sont transposables, seules ou en combinaison, à un procédé.

## Revendications

1. Procédé de pilotage d'un frein de parking de véhicule (V) comprenant une ligne de commande (200) et une ligne supplémentaire (100) adaptées pour être reliées à un système de freinage hydraulique d'un attelage, dans lequel on pilote la pression au sein de la ligne de commande (200) et de la ligne supplémentaire (100) en fonction d'une consigne appliquée au frein de parking comprise entre 0 et Cmax, ledit procédé de pilotage étant tel que :
- pour une consigne comprise entre 0 et C1, la pression au sein de la ligne de commande (200) est nulle, et la pression au sein de la ligne supplémentaire (100) est maintenue à une valeur constante Psupp non nulle ;
- pour une consigne comprise entre C1 et C3, une pression de freinage proportionnelle à la consigne est appliquée via la ligne de commande (200);
- pour une consigne comprise entre C2 et Cmax, la pression au sein de la ligne supplémentaire (100) est nulle ;
lesdites valeurs étant telles que
0 ≤ C1 < C2 ≤ Cmax, et
0 ≤ C1 < C3 ≤ Cmax.

2. Procédé selon la revendication 1, dans lequel pour une consigne comprise entre C1 et C2, la pression au sein de la ligne supplémentaire (100) est maintenue à la valeur constante Psupp.

3. Procédé selon l'une des revendications 1 ou 2, dans lequel pour une consigne comprise entre C3 et Cmax, la pression au sein de la ligne de commande (200) est nulle.

4. Procédé selon l'une des revendications 1 à 3, dans lequel la pression de freinage proportionnelle à la consigne appliquée via la ligne de commande (200) continue pour une consigne comprise entre C1 et C3.

5. Procédé selon l'une des revendications 1 à 4, dans lequel les valeurs de C1, C2 et C3 sont modifiées en fonction de l'usure du système de freinage hydraulique de l'attelage.

6. Procédé selon l'une des revendications 1 à 5, dans lequel les valeurs C1, C2 et C3 sont telles que
0,05 Cmax < C1 < 0,15 Cmax,
0,7 Cmax < C2 < 0,8 Cmax,
0,75 Cmax < C3 < 0,9 Cmax.

7. Procédé selon l'une des revendications 1 à 6, dans lequel les valeurs C1, C2 et C3 sont telles que 0 ≤ C1 < C2 < C3 ≤ Cmax.

8. Système hydraulique de freinage d'un véhicule (V) comprenant une ligne de commande (200) et une ligne supplémentaire (100) adaptées pour être reliées à un système de freinage hydraulique d'un attelage, un frein de parking (600) et un calculateur (400) configuré de manière à piloter la pression au sein de la ligne de commande (200) via une valve de commande (220) et de la ligne supplémentaire (100) via une valve supplémentaire (120) en fonction d'une consigne appliquée au frein de parking comprise entre 0 et Cmax,
ledit calculateur (400) étant configuré de manière à
- pour une consigne comprise entre 0 et C1, piloter la valve de commande (200) de sorte que la pression au sein de la ligne de commande (200) soit nulle, et piloter la valve supplémentaire de sorte que la pression au sein de la ligne supplémentaire (100) soit maintenue à une valeur constante Psupp non nulle ;
- pour une consigne comprise entre C1 et C3, piloter la valve de commande (200) de sorte que la pression au sein de la ligne de commande (200) soit proportionnelle à ladite consigne ;
- pour une consigne comprise entre C2 et Cmax, piloter la valve supplémentaire de sorte que la pression au sein de la ligne supplémentaire (100) soit nulle ;
lesdites valeurs étant telles que
0 ≤ C1 < C2 ≤ Cmax, et
0 ≤ C1 < C3 ≤ Cmax.

9. Système selon la revendication 8, dans lequel le calculateur (400) est configuré de manière à, pour une consigne comprise entre C1 et C2, piloter la valve supplémentaire de sorte que la pression au sein de la ligne supplémentaire (100) soit maintenue à la valeur constante Psupp.

10. Système selon l'une des revendications 8 ou 9, dans lequel le calculateur (400) est configuré de manière à, pour une consigne comprise entre C3 et Cmax, piloter la valve de commande de sorte que la pression au sein de la ligne de commande soit nulle.

11. Système selon l'une des revendications 8 à 10, dans lequel la pression de freinage proportionnelle à la consigne appliquée via la ligne de commande (200) est continue pour une consigne comprise entre C1 et C3.

12. Système selon l'une des revendications 8 à 11, dans lequel les valeurs C1, C2 et C3 sont telles que
0,05 Cmax < C1 < 0,15 Cmax,
0,7 Cmax < C2 < 0,8 Cmax,
0,75 Cmax < C3 < 0,9 Cmax.

13. Système selon l'une des revendications 8 à 12, dans lequel les valeurs C1, C2 et C3 sont telles que 0 ≤ C1 < C2 < C3 ≤ Cmax.

14. Véhicule comprenant un système selon l'une des revendications 8 à 13.

## Patentansprüche

1. Verfahren zur Steuerung einer Feststellbremse eines Fahrzeugs (V), umfassend eine Steuerleitung (200) und eine zusätzliche Leitung (100), die dazu geeignet sind, mit einem hydraulischen Bremssystem eines Anhängers verbunden zu werden, wobei der Druck innerhalb der Steuerleitung (200) und der zusätzlichen Leitung (100) in Abhängigkeit von einem auf die Feststellbremse ausgeübten Einstellwert zwischen 0 und Cmax gesteuert wird, wobei das Verfahren zur Steuerung solcher Art ist, dass:
- für einen Einstellwert zwischen 0 und C1 der Druck innerhalb der Steuerleitung (200) null ist und der Druck innerhalb der zusätzlichen Leitung (100) auf einem konstanten Wert Psupp ungleich null gehalten wird,
- für einen Einstellwert zwischen C1 und C3 ein zu dem Einstellwert proportionaler Bremsdruck über die Steuerleitung (200) ausgeübt wird,
- für einen Einstellwert zwischen C2 und Cmax der Druck innerhalb der zusätzlichen Leitung (100) null ist,
wobei die Werte so sind, dass
0 ≤ C1 < C2 ≤ Cmax und
0 ≤ C1 < C3 ≤ Cmax.

2. Verfahren nach Anspruch 1, wobei für einen Einstellwert zwischen C1 und C2 der Druck innerhalb der zusätzlichen Leitung (100) auf dem konstanten Wert Psupp gehalten wird.

3. Verfahren nach einem der Ansprüche 1 oder 2, wobei für einen Einstellwert zwischen C3 und Cmax der Druck innerhalb der Steuerleitung (200) null ist.

4. Verfahren nach einem der Ansprüche 1 bis 3, wobei der Bremsdruck, der zu dem Einstellwert proportional ist, der über die Steuerleitung (200) ausgeübt wird, für einen Einstellwert zwischen C1 und C3 fortgesetzt wird.

5. Verfahren nach einem der Ansprüche 1 bis 4, wobei die Werte von C1, C2 und C3 in Abhängigkeit von dem Verschleiß des hydraulischen Bremssystems des Anhängers modifiziert werden.

6. Verfahren nach einem der Ansprüche 1 bis 5, wobei die Werte C1, C2 und C3 so sind, dass
0,05 Cmax < C1 < 0,15 Cmax,
0,7 Cmax < C2 < 0,8 Cmax,
0,75 Cmax < C3 < 0,9 Cmax.

7. Verfahren nach einem der Ansprüche 1 bis 6, wobei die Werte C1, C2 und C3 so sind, dass 0 ≤ C1 < C2 < C3 ≤ Cmax.

8. Hydraulisches Bremssystem eines Fahrzeugs (V), umfassend eine Steuerleitung (200) und eine zusätzlich Leitung (100), die dazu geeignet sind, mit einem hydraulischen Bremssystem eines Anhängers verbunden zu werden, eine Feststellbremse (600) und einen Rechner (400), der dazu ausgestaltet ist, den Druck innerhalb der Steuerleitung (200) über ein Steuerventil (220) und jenen innerhalb der zusätzlichen Leitung (100) über ein zusätzliches Ventil (120) in Abhängigkeit von einem Einstellwert, der auf die Feststellbremse ausgeübt wird, zwischen 0 und Cmax zu steuern,
wobei der Rechner (400) derart ausgestaltet ist, um
- für einen Einstellwert zwischen 0 und C1 das Steuerventil (200) auf solche Weise zu steuern, dass der Druck innerhalb der Steuerleitung (200) null ist, und das zusätzliche Ventil auf solche Weise zu steuern, dass der Druck innerhalb der zusätzlichen Leitung (100) auf einem konstanten Wert Psupp ungleich null gehalten wird,
- für einen Einstellwert zwischen C1 und C3 das Steuerventil (200) auf solche Weise zu steuern, dass der Druck innerhalb der Steuerleitung (200) proportional zu dem Einstellwert ist,
- für einen Einstellwert zwischen C2 und Cmax das zusätzliche Ventil auf solche Weise zu steuern, dass der Druck innerhalb der zusätzlichen Leitung (100) null ist, wobei die Werte so sind, dass
0 ≤ C1 < C2 ≤ Cmax und
0 ≤ C1 < C3 ≤ Cmax.

9. System nach Anspruch 8, wobei der Rechner (400) derart ausgestaltet ist, um für einen Einstellwert zwischen C1 und C2 das zusätzliche Ventil auf solche Weise zu steuern, dass der Druck innerhalb der zusätzlichen Leitung (100) auf dem konstanten Wert Psupp gehalten wird.

10. System nach einem der Ansprüche 8 oder 9, wobei der Rechner (400) derart ausgestaltet ist, um für einen Einstellwert zwischen C3 und Cmax das Steuerventil auf solche Weise zu steuern, dass der Druck innerhalb der Steuerleitung null ist.

11. System nach einem der Ansprüche 8 bis 10, wobei der Bremsdruck, der zu dem über die Steuerleitung (200) ausgeübten Einstellwert proportional ist, für einen Einstellwert zwischen C1 und C3 fortgesetzt wird.

12. System nach einem der Ansprüche 8 bis 11, wobei die Werte C1, C2 und C3 so sind, dass
0,05 Cmax < C1 < 0,15 Cmax,
0,7 Cmax < C2 < 0,8 Cmax,
0,75 Cmax < C3 < 0,9 Cmax.

13. System nach einem der Ansprüche 8 bis 12, wobei die Werte C1, C2 und C3 so sind, dass 0 ≤ C1 < C2 < C3 ≤ Cmax.

14. Fahrzeug, umfassend ein System nach einem der Ansprüche 8 bis 13.

## Claims

1. A method for driving a parking brake of a vehicle (V) comprising a control line (200) and a supplementary line (100) suitable for being linked to a hydraulic braking system of a coupling, wherein the pressure is driven in the control line (200) and in the supplementary line (100) as a function of a setpoint applied to the parking brake between 0 and Cmax, said driving method being such that:
- for a setpoint between 0 and C1, the pressure in the control line (200) is zero, and the pressure in the supplementary line (100) is kept at a constant non-zero value Psupp;
- for a setpoint between C1 and C3, a braking pressure proportional to the setpoint is applied via the control line (200);
- for a setpoint between C2 and Cmax, the pressure in the supplementary line (100) is zero;
said values being such that
0 ≤ C1 < C2 ≤ Cmax, and
0 ≤ C1 < C3 ≤ Cmax.

2. The method as claimed in claim 1, wherein for a setpoint between C1 and C2, the pressure in the supplementary line (100) is kept at the constant value Psupp.

3. The method as claimed in one of claims 1 or 2, wherein for a setpoint between C3 and Cmax, the pressure in the control line (200) is zero.

4. The method as claimed in one of claims 1 to 3, wherein the braking pressure proportional to the setpoint applied via the control line (200) is continuous for a setpoint between C1 and C3.

5. The method as claimed in one of claims 1 to 4, wherein the values of C1, C2 and C3 are modified as a function of the wear of the hydraulic braking system of the coupling.

6. The method as claimed in one of claims 1 to 5, wherein the values C1, C2 and C3 are such that
0.05 Cmax < C1 < 0.15 Cmax,
0.7 Cmax < C2 < 0.8 Cmax,
0.75 Cmax < C3 < 0.9 Cmax.

7. The method as claimed in one of claims 1 to 6, the values C1, C2 and C3 are such that 0 ≤ C1 < C2 < C3 ≤ Cmax.

8. A hydraulic braking system of a vehicle (V) comprising a control line (200) and a supplementary line (100) suitable for being linked to a hydraulic braking system of a coupling, a parking brake (600) and a computer (400) configured in such a way as to drive the pressure in the control line (200) via a control valve (220) and in the supplementary line (100) via a supplementary valve (120) as a function of a setpoint applied to the parking brake between 0 and Cmax,
said computer (400) being configured in such a way as to
- for a setpoint between 0 and C1, drive the control valve (200) such that the pressure in the control line (200) is zero, and drive the supplementary valve such that the pressure in the supplementary line (100) is kept at a constant non-zero value Psupp;
- for a setpoint between C1 and C3, drive the control valve (200) such that the pressure in the control line (200) is proportional to said setpoint;
- for a setpoint between C2 and Cmax, drive the supplementary valve such that the pressure in the supplementary line (100) is zero;
said values being such that
0 ≤ C1 < C2 ≤ Cmax, and
0 ≤ C1 < C3 ≤ Cmax.

9. The system as claimed in claim 8, wherein the computer (400) is configured in such a way as to, for a setpoint between C1 and C2, drive the supplementary valve such that the pressure in the supplementary line (100) is kept at the constant value Psupp.

10. The system as claimed in one of claims 8 or 9, wherein the computer (400) is configured in such a way as to, for a setpoint between C3 and Cmax, drive the control valve such that the pressure in the control line is zero.

11. The system as claimed in one of claims 8 to 10, wherein the braking pressure proportional to the setpoint applied via the control line (200) is continuous for a setpoint between C1 and C3.

12. The system as claimed in one of claims 8 to 11, wherein the values C1, C2 and C3 are such that
0.05 Cmax < C1 < 0.15 Cmax,
0.7 Cmax < C2 < 0.8 Cmax,
0.75 Cmax < C3 < 0.9 Cmax.

13. The system as claimed in one of claims 8 to 12, wherein the values C1, C2 and C3 are such that 0 ≤ C1 < C2 < C3 ≤ Cmax.

14. A vehicle comprising a system as claimed in one of claims 8 to 13.
